# DEMANDE DE BREVET EUROPEEN

(11) **EP 1 938 894 A1**
(43) Date de publication de la demande: **02.07.2008**
(21) Numéro de dépôt: 07291352.8
(22) Date de dépôt: 12.11.2007
(51) Int. Cl.: B01J 21/16, B01J 29/04, B01J 37/03

(54) **Procede de preparation de magadiite ou kenyaite a partir d'un structurant organique comportant deux fonctions alcools terminales**

(30) Priorité: 15.12.2006 FR 0610998
(71) Demandeur: IFP, 92852 Rueil-Malmaison Cédex (FR)
(72) Inventeur: Guillon, Emmanuelle, 69390 Vernaison (FR); Bats, Nicolas, 69320 Feyzin (FR); Fecant, Antoine, 69003 Lyon (FR)

(57) **Abrégé**

On décrit un procédé de préparation d'au moins un solide lamellaire cristallisé constitué de magadiite ou de kenyaite consistant à procéder dans une étape (i) au mélange d'au moins une source de silice, d'au moins un structurant organique de formule HO-(CH₂)ₙ-OH, avec 2 ≤ n ≤ 5, d'au moins un métal alcalin et/ou alcalino-terreux M et de l'eau puis à procéder dans une étape (ii) au traitement hydrothermal dudit mélange jusqu'à ce qu'au moins ledit solide lamellaire cristallisé se forme.

## Description

### Domaine de l'invention

L'invention concerne le domaine de la préparation de solides lamellaires à base de silicate, connus également sous le nom de solides lamellaires de type phyllosilicates ou silicates lamellaires. On entend par solide lamellaire à base de silicate un composé solide formé de couches (ou feuillets) superposées mais séparées les unes des autres d'une distance variant entre 2 et 5 Å, lesdites couches étant constituées de silicium arrangé en coordination tétraédrique (SiO₄). D'autres éléments que le silicium Si peuvent être présents dans le solide également en position tétraédrique.

### Art antérieur

Parmi les silicates lamellaires, on peut citer la magadiite, natrosilite, kenyaite, makatite, nekoite, kanemite, okenite, dehayelite, macdonalite et rhodesite.

Ces solides existent souvent à l'état naturel avec une composition du type AₓSi_{y}O_{z}, nH₂O, avec 1 ≤ x ≤ 15, 2 ≤ y ≤ 32, 4 ≤ z ≤ 80 et 0 ≤ n ≤ 20 (x, y, z et n étant des nombres entiers ou rationnels), A pouvant être, par exemple, un élément sodium ou potassium. De tels solides lamellaires présentent, par exemple, la composition Na₂Si₁₄O₂₉·9H₂O pour la magadiite et la composition Na₂Si₂₀O₄₁·10H₂O pour la kenyaite. Les solides obtenus par synthèse présentent la même composition que les solides présents à l'état naturel. Ces silicates lamellaires, en particulier la magadiite et la kenyaite, présentent souvent une structure tridimensionelle, avec des interactions de type Van der Walls entre les feuillets ainsi qu'une faible surface spécifique.

Ces silicates lamellaires et en particulier la magadiite et la kenyaite possèdent des propriétés d'absorption et d'échange qui sont intéressantes. Ces solides sont particulièrement adaptés pour l'adsorption d'eau ou de molécules organiques ainsi que pour l'échange cationique de surface. Récemment, les silicates lamellaires ont été largement étudiés pour leur capacité à devenir un solide acide par échange protonique. D'autres études ont également montré que l'introduction de piliers dans les espaces interlamellaires permet de créer une mésoporosité et d'augmenter la surface spécifique.
Il est connu de la demande de brevet WO 88/00091 de synthétiser un silicate lamellaire ponté à partir d'un silicate lamellaire constitué par de la magadiite de synthèse laquelle a été préparée en utilisant un structurant organique choisi parmi le chlorure de benzyltriéthylammonium, le chlorure de benzyltriméthylammonium, le chlorure de dibenzyldiméthylammonium, le N,N'-diméthylpiperazine, la triéthylamine, ou d'autres composés quaternaires ou des amines hétérocycliques.
Il est également connu de la demande de brevet WO 91/12204 de synthétiser un silicate lamellaire cristallisé de type kenyaite en utilisant un composé organique sélectionné parmi une alkylamine, une trialkylamine, un composé tétraalkylammonium et une diamine triméthylhexaméthylenediamine, ledit alkyl ayant de 1 à 12 atomes de carbone.
Il est connu de la demande de brevet EP -A- 1.559.681 de synthétiser des solides lamellaires à base de silicates de type kenyaite et magadiite en utilisant un structurant organique choisi parmi la tyramine, le 4-aminophénol, le trans-4-aminocyclohexanol, le 2-(4-amino-phényl)-éthanol, ou d'autres composés comportant au moins un groupement alcool et au moins un groupement amine séparés par une chaîne hydrocarbonée ayant de 1 à 20 atomes de carbone.

### Description sommaire de l'invention

L'invention a pour objet un procédé de préparation d'au moins un solide lamellaire cristallisé choisi parmi la magadiite et la kenyaite consistant à procéder dans une étape (i) au mélange d'au moins une source de silice, d'au moins un structurant organique de formule HO-(CH₂)ₙ-OH, 2 ≤ n ≤ 5, d'au moins un métal alcalin et/ou alcalino-terreux M et de l'eau puis à procéder dans une étape (ii) au traitement hydrothermal dudit mélange jusqu'à ce qu'au moins ledit solide lamellaire cristallisé se forme. De manière avantageuse, ledit mélange formé au cours de ladite étape (i) comprend au moins une source d'au moins un élément X à coordinence tétraédrique et différent du silicium.

Il a été découvert que, de manière surprenante, un structurant organique comportant deux fonctions alcools terminales séparées par le motif d'une chaîne méthylène - (CH₂)- répété de 2 à 5 fois, mis en mélange avec au moins une source de silice, au moins un métal alcalin et/ou alcalino-terreux et de l'eau, conduit à la production d'au moins un solide lamellaire cristallisé choisi parmi la magadiite et la kenyaite. Le procédé selon l'invention est particulièrement avantageux car la cristallisation d'au moins dudit solide lamellaire est réalisée en quelques heures alors que le temps de cristallisation est généralement compté en jours pour la production de magadiite ou de kenyaite selon les procédés de l'art antérieur.

### Description détaillée de l'invention

La présente invention a pour objet un procédé de préparation d'au moins un solide lamellaire cristallisé choisi parmi la magadiite et la kenyaite consistant à procéder dans une étape (i) au mélange d'au moins une source de silice, d'au moins un structurant organique de formule HO-(CH₂)ₙ-OH, 2 ≤ n ≤ 5, d'au moins un métal alcalin et/ou alcalino-terreux M et de l'eau puis à procéder dans une étape (ii) au traitement hydrothermal dudit mélange jusqu'à ce qu'au moins ledit solide lamellaire cristallisé se forme.

Conformément au procédé de préparation selon l'invention, le structurant organique utilisé pour la mise en oeuvre de ladite étape (i) présente deux fonctions alcools terminales séparées par le motif d'une chaîne méthylène -(CH₂)- répété de 2 à 5 fois. Aussi, ledit structurant organique présente la formule HO-(CH₂)ₙ-OH dans laquelle n est un entier compris entre 2 et 5. De manière préférée, n est égal à 2, 4 ou 5. Lorsque n = 2 , ledit structurant organique utilisé est l'éthylène glycol. Lorsque n = 4, ledit structurant organique utilisé est le 1,4 - butanediol et lorsque n = 5, ledit structurant organique utilisé est le 1,5 - pentanediol. De manière très préférée, ledit structurant organique est l'éthylène glycol. Ledit structurant organique employé dans l'étape (i) du procédé selon l'invention est dépourvu de fonction(s) amine(s). Selon le mode de réalisation très préféré du procédé de l'invention dans lequel le structurant organique est l'éthylène glycol, le solide lamellaire cristallisé obtenu est soit de la magadiite pure, soit de la kenyaite pure soit un mélange de magadiite et de kenyaite, de préférence on obtient de la magadiite pure. Conformément au procédé selon l'invention, la magadiite et la kenyaite sont obtenus seules, à l'état pur en l'absence de toute autre phase cristallisée ou amorphe, ou en mélange.

Ledit métal alcalin et/ou alcalino-terreux M incorporé dans l'étape (i) du procédé de préparation selon l'invention est choisi parmi le lithium, le potassium, le sodium et le calcium et le mélange d'au moins deux de ces métaux. De préférence, ledit métal M est un métal alcalin et de manière très préférée il s'agit du sodium.

Ladite source de silice incorporée dans l'étape (i) du procédé de préparation selon l'invention peut être l'une quelconque de celle couramment utilisée dans la synthèse de solides lamellaires cristallisés à base de silicates, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX.
Conformément au procédé de préparation d'au moins un solide lamellaire cristallisé selon l'invention, ledit mélange formé au cours de ladite étape (i) comprend avantageusement au moins une source d'au moins un élément X à coordinence tétraédrique et différent du silicium. De manière plus préférée, l'élément X est choisi dans le groupe formé par l'aluminium, le bore, le chrome, le fer, le gallium, l'indium, le nickel, le zirconium, le cobalt, le titane, le zinc, le cuivre, le niobium et l'europium et le mélange d'au moins deux de ces éléments. De manière encore plus préférée, l'élément X est l'aluminium. La source de l'élément X peut être tout composé comprenant l'élément X et pouvant libérer cet élément en solution aqueuse sous forme réactive. L'élément X peut être incorporé dans le mélange sous une forme oxydée XOₐ avec 1 ≤ a ≤ 3 (a étant un nombre entier ou un nombre rationnel), ou sous toute autre forme, telle que, par exemple, un diacétate de l'élément X, notamment Co(CH₃COO)₂, Ni(CH₃COO)₂, Zn(CH₃COO)₂, Cu(CH₃COO)₂, Cr(CH₃COO)₂ et Eu(CH₃COO)₂. Lorsque X est le titane, on utilise avantageusement Ti(EtO)₄, lorsque X est le zirconium, on utilise avantageusement Zr(OH)₄, lorsque X est le niobium, on utilise avantageusement Nb₂B₄O₇ ou Nb₂O₅. Dans le cas préféré où X est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Conformément au procédé de préparation selon l'invention, le mélange réactionnel obtenu à l'étape i) présente une composition chimique exprimée, en termes de moles d'oxydes, par la formule :

SiO₂ : w XOₐ : x M⁺OH⁻ : y H₂O : z R

- w étant compris entre 0 et 0,5, de préférence entre 0 et 0,1, de manière très préférée compris entre 0,001 et 0,1,
- x étant compris entre 0,001 et 1, de préférence entre 0,01 et 0,6,
- y étant compris entre 10 et 100,
- z étant compris entre 1 et 15, de préférence entre 1,2 et 5, de manière très préférée entre 1,4 et 3,
- a étant compris entre 1 et 3,
et où X est au moins un élément à coordinence tétraédrique et différent du silicium, de préférence choisi dans le groupe formé par l'aluminium, le bore, le chrome, le fer, le gallium, l'indium, le nickel, le zirconium, le cobalt, le titane, le zinc, le cuivre, le niobium et l'europium et le mélange d'au moins deux de ces éléments, de manière encore plus préférée X est l'aluminium, M est au moins un cation choisi parmi le lithium, le potassium, le sodium et le calcium et le mélange d'au moins deux de ces métaux, de préférence, le sodium, R est le structurant organique de formule HO-(CH₂)ₙ-OH, 2 ≤ n ≤ 5. w, x, y et z représentent respectivement le nombre de moles de XOₐ, de M⁺OH⁻, de H₂O et de R.

Conformément à l'étape (ii) du procédé selon l'invention, on procède au traitement hydrothermal dudit mélange réactionnel jusqu'à ce qu'au moins ledit solide lamellaire cristallisé choisi parmi la magadiite et la kenyaite se forme. Le mélange réactionnel est avantageusement mis sous conditions hydrothermales sous une pression de réaction autogène, éventuellement en ajoutant du gaz, par exemple de l'azote, à une température de cristallisation comprise entre 100 et 200°C, de préférence entre 150°C et 190°C jusqu'à la formation des cristaux lamellaires de magadiite et/ou de kenyaite. La durée nécessaire pour obtenir la cristallisation varie généralement entre 10 et 48 heures, de préférence entre 15 et 30 heures. Pendant la durée de l'étape (ii) de cristallisation, le mélange réactionnel peut être vigoureusement agité ou ne pas l'être.

De préférence, le produit obtenu à l'issue de l'étape ii) de cristallisation est soumis à au moins une des étapes suivantes, de préférence à l'ensemble desdites étapes suivantes :
iii) une étape de séparation d'au moins dudit solide lamellaire cristallisé du mélange de cristallisation,
iv) une étape de lavage d'au moins dudit solide lamellaire cristallisé, et
v) une étape de séchage d'au moins dudit solide cristallisé.

Le solide cristallisé est généralement séparé du mélange selon l'étape iii) du procédé de préparation selon l'invention par toute méthode connue de l'Homme du métier telle que la filtration. Le solide est ensuite lavé à l'eau conformément à l'étape iv) du procédé selon l'invention, de préférence de l'eau dé-ionisée. L'étape v) de séchage est généralement réalisée à une température comprise entre 50 et 150°C pendant une durée allant de 12 à 30 heures. Le séchage est, de préférence, réalisé à pression atmosphérique mais peut également être effectué sous pression. A l'issue de l'ensemble de ces étapes, on obtient au moins un solide lamellaire cristallisé constitué de magadiite et/ou de kenyaite.

Conformément à l'invention, il est avantageux de réaliser un échange cationique du métal alcalin et/ou alcalino-terreux introduit au cours de ladite étape i) du procédé de préparation d'au moins dudit solide lamellaire cristallisé, ledit échange cationique étant réalisé avec des ions hydrogène à l'issue de l'étape v) de séchage d'au moins dudit solide lamellaire. Cet échange cationique avec des protons confère de l'acidité au solide lamellaire cristallisé constitué de magadiite et/ou de kenyaite.

Les exemples qui suivent illustrent l'invention sans en limiter la portée.

### Exemple 1 : synthèse de la magadiite silicique

32,20 g d'une suspension colloïdale de silice, connue sous le terme commercial Ludox HS-40 commercialisée par Aldrich, est incorporée dans une solution composée de 2,15 g de soude (prolabo), 21,03 g d'éthylène glycol (> 99 %, Aldrich) dans 60,50 g d'eau déionisée. Le mélange est agité vigoureusement pendant une demi-heure. Le mélange est ensuite transféré, après homogénéisation, dans un autoclave. L'autoclave est chauffé pendant 20 heures à 175°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la magadiite pure.

### Exemple 2 : synthèse de la magadiite silicique

27,53 g d'une suspension colloïdale de silice, connue sous le terme commercial Ludox HS-40 commercialisée par Aldrich, est incorporée dans une solution composée de 1,84 g de soude (prolabo), 42,87 g d'éthylène glycol (> 99%, Aldrich) dans 45,82 g d'eau déionisée. Le mélange est agité vigoureusement pendant une demi-heure. Le mélange est ensuite transféré, après homogénéisation, dans un autoclave. L'autoclave est chauffé pendant 20 heures à 175°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la magadiite pure.

### Exemple 3 : synthèse de la magadiite substituée avec de l'aluminium

32,16 g d'une suspension colloïdale de silice, connue sous le terme commercial Ludox HS-40 commercialisée par Aldrich, est incorporée dans une solution composée de 1,99 g de soude (prolabo), 0,172 g d'aluminate de sodium (carlo erba), 21,01 g d'éthylène glycol (> 99%, Aldrich) dans 60,63 g d'eau déionisée. Le mélange est agité vigoureusement pendant une demi-heure. Le gel ainsi formé présente un rapport Si/Al de 60. Le mélange est ensuite transféré, après homogénéisation, dans un autoclave. L'autoclave est chauffé pendant 20 heures à 175°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la magadiite pure.

### Exemple 4 : synthèse de la magadiite substituée avec de l'aluminium

25,58 g d'une suspension colloïdale de silice, connue sous le terme commercial Ludox HS-40 commercialisée par Aldrich, est incorporée dans une solution composée de 1,55 g de soude (prolabo), 0,109 g d'aluminate de sodium (carlo erba), 23,89 g de 1,4 - butanediol (99 %, Aldrich) dans 47,88 g d'eau déionisée. Le mélange est agité vigoureusement pendant une demi-heure. Le gel ainsi formé présente un rapport Si/Al de 130. Le mélange est ensuite transféré, après homogénéisation, dans un autoclave. L'autoclave est chauffé pendant 24 heures à 160°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la magadiite pure.

### Exemple 5 : synthèse de la kenyaite silicique

24,70 g d'une suspension colloïdale de silice, connue sous le terme commercial Ludox HS-40 commercialisée par Aldrich, est incorporée dans une solution composée de 1,55 g de soude (prolabo), 26,63 g de 1,5 - pentanediol (96 %, Aldrich) dans 46,917 g d'eau déionisée. Le mélange est agité vigoureusement pendant une demi-heure. Le mélange est ensuite transféré, après homogénéisation, dans un autoclave. L'autoclave est chauffé pendant 16 heures à 175°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la kenyaite pure.

### Exemple 6 : synthèse de la kenyaite substituée avec de l'aluminium

24,66 g d'une suspension colloïdale de silice, connue sous le terme commercial Ludox HS-40 commercialisée par Aldrich, est incorporée dans une solution composée de 1,49 g de soude (prolabo), 0,105 g d'aluminate de sodium (carlo erba), 26,60 g de 1,5 pentanediol (96 %, Aldrich) dans 46,11 g d'eau déionisée. Le mélange est agité vigoureusement pendant une demi-heure. Le gel ainsi formé présente un rapport Si/Al de 130. Le mélange est ensuite transféré, après homogénéisation, dans un autoclave. L'autoclave est chauffé pendant 24 heures à 160°C sous agitation. Le produit cristallisé obtenu est filtré, lavé à l'eau déionisée (pour atteindre un pH neutre) puis séché une nuit à 100°C.
Le diffractogramme (DRX) effectué sur ce produit est caractéristique de la kenyaite pure.

## Revendications

1. Procédé de préparation d'au moins un solide lamellaire cristallisé choisi parmi la magadiite et la kenyaite consistant à procéder dans une étape (i) au mélange d'au moins une source de silice, d'au moins un structurant organique de formule HO-(CH₂)ₙ-OH, 2 ≤ n ≤ 5, d'au moins un métal alcalin et/ou alcalino-terreux M et de l'eau puis à procéder dans une étape (ii) au traitement hydrothermal dudit mélange jusqu'à ce qu'au moins ledit solide lamellaire cristallisé se forme.

2. Procédé de préparation selon la revendication 1 tel que ledit structurant organique est choisi parmi l'éthylène glycol, le 1,4 - butanediol et le 1,5 - pentanediol.

3. Procédé de préparation selon la revendication 2 tel que ledit structurant organique est l'éthylène glycol.

4. Procédé de préparation selon l'une des revendications 1 à 3 tel que ledit métal alcalin et/ou alcalino-terreux M est choisi parmi le lithium, le potassium, le sodium et le calcium et le mélange d'au moins deux de ces métaux.

5. Procédé de préparation selon la revendication 4 tel que ledit métal alcalin et/ou alcalino-terreux M est le sodium.

6. Procédé de préparation selon l'une des revendications 1 à 5 tel que ladite source de silice incorporée dans ladite étape (i) est une silice colloïdale.

7. Procédé de préparation selon l'une des revendications 1 à 6 tel que ledit mélange formé au cours de ladite étape (i) comprend au moins une source d'au moins un élément X à coordinence tétraédrique et différent du silicium.

8. Procédé de préparation selon la revendication 7 tel que ledit élément X est l'aluminium.

9. Procédé de préparation selon l'une des revendications 1 à 8 tel que le mélange réactionnel obtenu à ladite étape (i) présente une composition chimique exprimée, en termes de moles d'oxydes, par la formule :
SiO₂ : w XOₐ : x M⁺OH⁻ : y H₂O : z R
w étant compris entre 0 et 0,5, x étant compris entre 0,001 et 1, y étant compris entre 10 et 100, z étant compris entre 0,05 et 15, a étant compris entre 1 et 3, et où X est au moins un élément à coordinence tétraédrique et différent du silicium, M est au moins un cation choisi parmi le lithium, le potassium, le sodium et le calcium et le mélange d'au moins deux de ces métaux, R est le structurant organique de formule HO-(CH₂)ₙ-OH, 2 ≤ n ≤ 5, w, x, y et z représentant respectivement le nombre de moles de XOₐ, de M⁺OH⁻, de H₂O et de R.

10. Procédé de préparation selon l'une des revendications 1 à 9 tel que ladite étape (ii) est mise en oeuvre en soumettant ledit mélange réactionnel à des conditions hydrothermales, sous une pression de réaction autogène à une température de cristallisation comprise entre 100 et 200°C.

11. Procédé de préparation selon l'une des revendications 1 à 10 tel que la durée de ladite étape (ii) varie entre 10 et 48 heures.

12. Procédé de préparation selon l'une des revendications 1 à 11 tel que ledit produit issu de ladite étape (ii) de cristallisation est soumis à au moins :
iii) une étape de séparation d'au moins dudit solide lamellaire cristallisé du mélange de cristallisation,
iv) une étape de lavage d'au moins dudit solide lamellaire cristallisé, et
v) une étape de séchage d'au moins dudit solide cristallisé.
